(19) Europäisches Patentamt
European Patent Office
Office européen des brevets

(11) Publication number: **0 199 278 B1**

(12) **EUROPEAN PATENT SPECIFICATION**

(45) Date of publication of patent specification: **13.10.93**

(51) Int. Cl.[5]: **C08L 81/02**, C08L 23/04, C08K 5/54, H01B 3/30

(21) Application number: **86105265.2**

(22) Date of filing: **16.04.86**

The file contains technical information submitted after the application was filed and not included in this specification

# (54) Poly(Arylene Sulfide) compositions with improved insulation resistance and cracking resistance.

(30) Priority: **16.04.85 US 723985**

(43) Date of publication of application: **29.10.86 Bulletin 86/44**

(45) Publication of the grant of the patent: **13.10.93 Bulletin 93/41**

(84) Designated Contracting States: **AT BE CH DE FR GB IT LI LU NL SE**

(56) References cited:
**EP-A- 0 062 806**
**EP-A- 0 074 632**
**EP-A- 0 100 913**
**EP-A- 0 124 106**
**EP-A- 0 142 825**
**US-A- 4 134 874**
**US-A- 4 544 700**

(73) Proprietor: **PHILLIPS PETROLEUM COMPANY**
**5th and Keeler**
**Bartlesville Oklahoma 74004(US)**

(72) Inventor: **Leland, John Everard**
**1424 S. E. Lariat Drive**
**Bartlesville, OK 74006(US)**
Inventor: **Dix, James Seward**
**115 S.W. 9th Street**
**Bartlesville, OK 74003(US)**
Inventor: **Wright, Roy Franklin**
**2076 S.E. Southview**
**Bartlesville, OK 74003(US)**

(74) Representative: **Dost, Wolfgang, Dr. rer. nat. Dipl.-Chem. et al**
**Patent- u. Rechtsanwälte**
**Bardehle, Pagenberg, Dost, Altenburg Frohwitter & Partner,**
**Postfach 86 06 20**
**D-81633 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

This invention relates to poly(arylene sulfide) compositions. In another aspect the invention relates to poly(arylene sulfide) compositions with improved electrical insulation resistance and cracking resistance. The invention also relates to a process for producing poly(arylene sulfide) compositions.

### Background

Poly(arylene sulfide) is a distinctive material that has been produced commercially for a number of years and has found application in a variety of areas. Poly(arylene sulfide) is resistant to most chemicals, it has a relatively high melting temperature compared to other thermoplastics and it has good dimensional stability and other properties which permit its wide variety of uses.

Poly(arylene sulfide) materials have found application in the electronics industry, but generally it is considered that the use of such materials in that industry is small in comparison to the potential that such materials have in that area. Electrical applications in which cracking resistance is coupled with very high electrical insulation resistance are numerous and poly(arylene sulfide) compositions are highly desirable for such uses when one considers the inherent properties of poly(arylene sulfide) materials. Poly(arylene sulfide) compositions which have both good cracking resistance and electrical insulation resistance would be desirable.

US 4 134 874 discloses a method for improving the processability of poly(arylene sulfide) compositions, by the addition of an amount of solid ethylene polymer.

The European patent application, EP-A 0 062 806 provides a molding composition comprising poly-(arylene sulfide), glass fibres, a further component chosen from glass beads and fused silica and an organic silane. The composition comprising 0.5-3 weight-% organic silane, preferably an amino silane, improves cracking resistance. Polyethylene is mentioned as an optional processing aid.

EP-A 0 074 632 relates to glass-filled poly(arylene sulfide) (PAS) compositions containing organosilanes, where properties such as increased or decreased flow rate and improved hydrolytic stability of the glass-filled poly(arylene sulfide) compositions are achieved by the addition of certain organosilanes, including aminosilanes. In a reference relating to the encapsulation of electronic components, EP-A 0 100 913 it is disclosed that the electrical resistance of poly(arylene sulfide) compositions are increased by the presence of a mercaptosilane such as, for example, 3-mercapto-propyltrimethoxylane. A composition comprising this silane, as well as polyethylene as a processing agent gives electrical insulation resistance cues from the order of $10^{10}$.

EP-A 0 124 106 also discloses PAS compositions in which certain silanes increase the electrical insulation resistance of the composition. An example is given of a poly(phenylene sulfide) (PPS) composition comprising a silane and polyethylene as a processing aid. The composition is extruded at 288°-315°C (572°-600°F). An insulation resistance of such compounds on the order of $10^{12}$ was found.

EP-A 0 142 825 discloses that the impact strength and crack resistance of poly(arylene sulfide) compositions can be improved by the addition of an amount of polymeric rubber, for example ethylene-propylene rubber, where in a further embodiment, an organosilane can also be included in the composition. High density polyethylene is used in minor amounts as a processing aid.

Although not belonging to the prior art, US 4 544 700 which issued on October 1, 1985, discloses a poly(arylene sulfide) composition containing a reinforcing material such as glass or carbon fibres and a minor amount of low density polyethylene. The reference also includes comparative examples contrasting the effects of low density and high density polyethylene on cracking resistance.

### Objects

Therefore an object of the invention is a poly(arylene sulfide) composition having good cracking resistance and electrical insulation resistance and a process for producing same.

Another object of the invention is an poly(arylene sulfide) composition which can be molded into articles having improved cracking resistance and electrical insulation resistance as compared to such compositions of the prior art.

### Summary of the Invention

According to the invention, a PAS composition and a process for producing the composition are provided as defined in the claims. The inventive composition comprises poly(arylene sulfide), a reinforcing

material, polyethylene with a density of 0.910 to 0.940 and at least one organosilane. Such a composition will generally contain from 30 to 80 parts by weight of the poly(arylene sulfide) component, from 20 to 70 parts by weight of the reinforcing material, from 0.5 to 10 parts by weight of the low density polyethylene and from 0.1 to 5 parts by weight of at least one of the organosilanes, wherein poly(arylene sulfide) and the reinforcing material together are 100 parts by weight.

Prior to the present, poly(arylene sulfide) compositions were not available which provided good cracking resistance and at the same time an electrical insulation resistance of at least 1.0 x $10^9$ ohms. The present inventive compositions combine these two properties with the outstanding properties of poly(arylene sulfides) and provide a composition which is useful to mold a variety of articles including thick walled articles used in the electrical industry. Further the compositions of the present invention can be improved in appearance by the addition of certain pigments such as certain carbon black materials and the mold life can be improved by the incorporation of mold corrosion inhibitors such as hydrotalcite.

## Detailed Description of the Invention

In its broadest aspect the present composition contains poly(arylene sulfide), reinforcing material, polyethylene with a density of 0.910 to 0.940 and at least one of the organosilanes. For convenience Table I is provided showing one embodiment of the broad, medium and narrow ranges of the above components with the value shown representing weight percent based on total weight of the composition.

Table I

| Component | Broad | Medium | Narrow |
|---|---|---|---|
| Poly(arylene sulfide) | 30-80 | 40-75 | 50-70 |
| Reinforcing material | 20-70 | 25-60 | 30-50 |
| Low density polyethylene | 0.5-10 | 0.5-5 | .75-3 |
| Organosilane | 0.1-5 | 0.1-4 | .25-3 |

Suitable poly(arylene sulfide) resins useful in the present invention for example are those described in U.S. Patents 3,919,177 and 4,038,261. The preferred poly(arylene sulfide) is poly(phenylene sulfide). Generally, the poly(arylene sulfide) will have a melt flow of less than about 400 grams per 10 minutes, as measured by ASTM D-1238 using a 5 kilogram weight at 315 °C (600 °F) through a 2.1 mm (0.0825 inch) diameter orifice. Suitable poly(arylene sulfide) resins useful in the present invention can be prepared according to the processes described in the patents referenced above, and particularly as described in U.S. Patent 4,038,261 employing a minor amount of trichlorobenzene branching agent to achieve the desired melt flow. The most preferred poly(arylene sulfide) resins useful in the present invention are those manufactured by Phillips Petroleum Company and marketed as Ryton poly(phenylene sulfide) resins having a melt flow of from about 10 to about 400 grams per 10 minutes determined by the ASTM test referenced above. It is also within the scope of the invention to employ copolymers of poly(arylene sulfide). Generally, although not necessarily, such copolymers will contain at least 90 mole percent of unsubstituted phenylene units.

The preferred reinforcing material used in the present invention is glass fibers. While there are a variety of glass fiber reinforcing materials available, those specifically developed for electrical applications are preferred, which are often referred to as "E glass". If a finish or sizing is used on the glass fibers it should be one that is compatible with the other components of the composition, such as the organosilane. Glass fibers that have been used in the inventive composition with good results are those produced by Owens-Corning Corporation and marked as Fiberglas 497.

The compositions of the present invention also contain a minor amount of a low density polyethylene. Ethylene homopolymers and copolymers may be used, with ethylene polymers prepared by the incorporation of monomers comprising at least about 90 mole percent ethylene with 10 to 0 mole percent of the remaining comonomer being preferably a 1-olefin. As used herein, low density polyethylenes are those having a density of from about 0.910 to about 0.940, preferably from about 0.910 to about 0.930, as determined by ASTM test method D-1505. Further although not essential it is desirable for the low density polyethylene component to have a melt index greater than about 100 grams per 10 minutes and more preferably greater than about 400 grams per 10 minutes as determined by ASTM test method D-1238 Condition E.

The last essential component of the present inventive composition is at least one organosilane represented by the following generic formula:

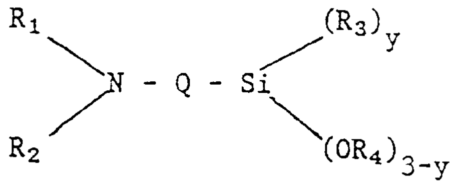

,

where

$R_1$ and $R_2$ are individually selected from the group consisting of hydrogen, alkyl, alkaryl, aminoalkyl, carboxyalkylaminoalkyl, aryl, aralkyl, carbamoyl, hydroxyalkyl, and vinylaralkylaminoalkyl groups containing 1 to 10 carbon atoms or where $R_1$ and $R_2$ are joined by a valence bond to form a cyclic structure of from 5 to 16 atoms including the nitrogen atom therein, $R_3$ and $R_4$ are individually selected from the group consisting of alkyl and cycloalkyl groups containing 1 to 6 carbon atoms, Q is a divalent hydrocarbon radical containing from 1 to 18 carbon atoms, and y is 0, 1 or 2.

Representative organosilanes are:
3-Aminopropyltrimethoxysilane,
3-Aminopropyltriethoxysilane,
3-Aminopropylmethyldiethoxysilane,
N-Phenyl-3-aminopropyltrimethoxysilane,
p-Aminophenyltrimethoxysilane,
3-(Diethylamino)propyltrimethoxysilane,
N-beta-(Aminoethyl)-gamma-aminopropyltrimethoxysilane,
N-(2-Aminoethyl)-N'-[(3-trimethoxysilyl)propyl]-1,2-ethanediamine,
N-(3-Aminopropyl)-N'-[(trimethoxysilyl)methyl]-1,3-propanediamine,
Methyl 3-[2-(trimethoxysilylpropylamino)-ethylamino]-propionate,
N-{2-[3-(Trimethoxysilyl)propylamino]ethyl}-p-vinylbenzylammonium chloride,
N-bis-(2-Hydroxyethyl)-3-aminopropyltriethoxysilane,
gamma-Ureidopropyltriethyloxysilane, and
gamma-[1-(4,5-Dihydroimidazole)]-propyltriethoxysilane.

In addition to the four essential components described above the inventive composition can also contain optional components such as mold corrosion inhibitors, pigments, processing aids and the like. Since one of the primary uses for the inventive composition will be as a molding compound and since poly(arylene sulfide) compositions are somewhat corrosive in nature, in order to increase mold life a mold corrosion inhibitor such as, for example, a hydrotalcite may be used without adverse effect to the cracking resistance and the electrical insulation resistance of the inventive composition. As shown in the Examples, the hydrotalcite DHT-4A sold by Kyowa Chemical Industry Company, Limited, Osaha, Japan was used with excellent results. Further it is frequently desirable to incorporate a pigment in the inventive composition so that the articles produced from the inventive composition have a uniform color. Often the parts produced from poly(arylene sulfide) compositions have a somewhat streaky or nonuniform appearance and the incorporation of a pigment, particularly those developed for electrical applications, may be used. For example, a pigment such as channel black has been used in the inventive composition and results in products having a uniform color without affecting the cracking resistance and the electrical insulation resistance. The pigment used in the inventive composition with excellent results was a channel black sold by the West German company Degussa, and marked as Special Black-4, regular color channel black.

For convenience Table II is provided to show the preferred broad, medium and narrow ranges for the amount of mold corrosion inhibitor and pigments. The amounts shown are in terms of weight percent based on total weight of the composition and are included as optional additional components to Table I above.

Table II

| Component | Broad | Medium | Narrow |
|---|---|---|---|
| Mold corrosion inhibitor | 0.1-10 | 0.2-7 | 0.5-5 |
| Pigment | 0.1-5 | 0.1-3 | 0.2-2 |

As indicated above other components may be incorporated into the inventive composition such as a processing aid and the like depending upon the particular needs and requirements of the user.

In accordance with the process of the present invention, it has been found essential to carry out the hot melt extrusion of the dry blended mix of the components of the present inventive composition at as low an average machine temperature as possible and still obtain good homogeneity of the resulting product. As used herein the term "average machine temperature" means the average temperature of at least four (4) and preferably eight (8) approximately equally spaced temperature sensing means located on the extruder. As the data shows in the following examples the higher the average machine temperature the lower the cracking resistance of the resulting composition. Good results regarding cracking resistance were obtained when the average machine temperature was less than about 357 °C (675 °F), preferably less than about 343 °C (650 °F) and more preferably less than about 332 °C (630 °F).

As indicated earlier the inventive compositions are well adapted for use in applications where excellent electrical insulation resistance is important as well as those in which resistance to cracking is important. While the inventive compositions were developed for applications in the electrical apparatus field, they are useful in a variety of areas and their particular applicability in the electrical field should not be construed as a limitation upon the inventive compositions. Another way of defining the composition of this invention is in parts by weight in accordance with the following table Ia, with the proviso, that the components a) and b) together are preferably 100 parts by weight

Table Ia

| Component | Broad | Medium | Narrow |
|---|---|---|---|
| a) Poly(arylene sulfide) | 30-80 | 40-75 | 50-70 |
| b) Reinforcing material | 20-70 | 25-60 | 30-50 |
| c) Low density polyethylene | 0.5-10 | 0.5-5 | 0.75-3 |
| d) organosilane | 0.1-5 | 0.1-4 | 0.25-3 |

The mold corrosion inhibitor and pigment, when present, in this embodiment are present in parts by weight in ranges shown above in table II.

The following examples show the results obtained as a result of testing a number of compositions for cracking resistance and insulation resistance, some of which are outside the scope of the present inventive composition.

Examples

Twenty-four different compositions as shown in Table III were produced in 22.7 kg (50 pound) batches. Examples 1 through 11, 13, 17 to 19, 21 and 22 illustrate compositions outside the scope of the present invention and examples 12, 14 to 16, 20, 23, and 24 illustrate compositions in accordance with the present invention. The letters "NC" and "IC" shown in Table III mean non-inventive compositions and inventive compositions, respectively. Each composition was prepared by blending its components, except for glass, for about 3 minutes in a Henschel mixer at room temperature operating at about 1800 rpm. After this mixing period the glass reinforcement was added and mixing continued for about 3 additional seconds. Each mixture produced thereby was passed through a Crown Products 6.4 cm (2½ inch) diameter single screw extruder with a length to diameter ratio of 40:1. The average machine temperature which the melt was exposed to is indicated in Table III. The extruded material was cut into pellets and injection molded according to the procedure described below in the section entitled "Internal Cracking Resistance Measurement". Also, the compositions were tested for their electrical insulation resistance according to the procedure described below.

Electrical Insulation Resistance Measurement

The electrical insulation resistance was tested in accordance with the general method defined in ASTM test method D257 using a conditioning period of 48 hours in a 95 ± 1% relative humidity chamber at 90 ° C. The ASTM recommended practice E104 for controlling relative humidity was followed. The resistance was measured employing a 500 volt potential and a GenRad Megohmeter (type 1862-C) having a capability of measuring resistance upto 2 X $10^{12}$ ohms.

Internal Cracking Resistance Measurement

The procedure to determine the resistance of poly(arylene sulfide) compounds to internal cracking is as follows: The resin composition is dried at 150 ° C for two hours in forced air oven in trays that are not more than 3.8 cm (1.5 inches) deep. A New Britain model 75 injection molding machine containing a water-cooled, centergated mold is used to produce flat disks that are 6.4 cm (2.5 inches) in diameter by 1.3 cm (0.5 inches) thick. The injection pressure and holding pressure may be varied to match resin compositions to effect disk production. The other operating conditions of injection molding must be set and maintained at values indicated below.

| CONDITION | SETTING |
|---|---|
| Mold Cavity Temperature | 38 ° C |
| Clamp Pressure | Maximum Attainable |
| Barrel Melt Temperature | 316 ° C |
| Nozzle Melt Temperature | 316 ° C |
| Screw Speed | Maximum |
| Back Pressure | None |
| Injection Speed | Maximum |
| Injection Time | 5 seconds |
| Hold Time | 18 seconds |
| Hold Pressure | 68.9 MPa (10,000 psig) |
| Injection Pressure | 68.9 MPa (10,000 psig) |
| Cool Time | 150 seconds |

The shot size is sufficient to fill the mold with a 0.64 cm (0.25 inch) cushion and with no flash. The injection molder barrel is flushed three times with the resin composition to be tested. The next two or more shots are discarded before the next eighteen are collected and numbered in sequence. Immediately upon removal from the mold and while the disk is warm, the sprue is removed. Each disk is allowed to cool for at least two hours. Disks 5, 6, 7, 8, 10, 11, 12 and 13 are sawed parallel to the face to yield two disks each being approximately 0.64 cm (0.25 inches) thick. A Dayton metal cutting bandsaw (Model 3Z360G) equipped with a blade of ten teeth per 2.54 cm (1 inch) is used to saw the disks. The sawn disks and the whole disks 1, 2, 3, 4, 14, 15, 16, 17 and 18 are annealed by being placed in a forced air oven at 204 ° C for two hours. The whole and half disks are then cooled for eighteen to twenty-four hours. Disks 1, 2, 3, 4, 14, 15, 16 and 17 are sawed parallel to the face to yield two disks approximately 0.64 cm (0.25 inch) thick. The disks are then allowed to set at room temperature for an additional eighteen to twenty-four hours before rating. Whole disks numbered 9 (unannealed) and 18 (annealed) are saved for reference. The non-sprue sides of each half-disk are rinsed under a stream of warm water to remove sawdust and visually examined for cracks. Each disk is classified as non-cracked or cracked. The number of cracked disks observed out of the total observed from each of the two groups, cut/annealed non-sprue and annealed/cut non-sprue are reported as a ratio of cracked disks to the total disks tested of that specific group, for example, a 4/8 annealed and cut non-sprue rating indicates that 4 disks were cracked out of 8 disks that were annealed, then cut and then examined for cracks. While the sprue side can also be examined, the sprue side is subject to sore variables which give somewhat less reliable results compared to the non-sprue side. A resin composition yielding no more than a total of 9 cracked disks on the non-sprue side out of a total of 16 disks with 8 annealed and cut specimens and 8 cut and annealed specimens is required to be satisfactory for molding applications of thick articles.

It is also noted that the above-described Internal Cracking Resistance test was published in Plastics Engineering, April 1983, page 38, under the title "Screening Test for PPS Compounds".

TABLE III

| Examples | 1 | 2 | 3 | 4 | 5 | 6 |
|---|---|---|---|---|---|---|
| **A. Composition, Wt.%** | NC | NC | NC | NC | NC | NC |
| 1. PPS | | | | | | |
| Low[a] | 57.5 | 57.5 | - | - | - | 56.5 |
| High[b] | - | - | 57.5 | 56.5 | 56.5 | - |
| 2. Glass Fiber[c] | 40 | 40 | 40 | 40 | 40 | 40 |
| 3. Polyethylene, LD[d] | 1 | 1 | 1 | 1 | 1 | 1 |
| 4. Silane, 1 Wt.% of: | 0 | 0 | 0 | Z6032[i] | 1506[g] | Y9194[e] |
| 5. Mold Corrosion Inhibitor | | | | | | |
| $Li_2CO_3$ | 1 | - | 1 | 1 | 1 | 1 |
| DHT-4A[1] | - | 1 | - | - | - | - |
| 6. Pigment[m] | 0.5 | 0.5 | 0.5 | 0.5 | 0.5 | 0.5 |
| **B. Properties** | | | | | | |
| 1. Insulation Resistance, ohm | $1.6x10^7$ | $4.5x10^7$ | $2.7x10^7$ | $2.6x10^8$ | $7.3x10^8$ | $8.4x10^8$ |
| 2. Cracking Resistance | | | | | | |
| a. Cut and Annealed[n] Non-sprue side | 0 | - | 0 | 6 | 1 | 8 |
| b. Annealed and Cut[n] Non-sprue side | 0 | - | 0 | 0 | 0 | 1 |
| **C. Machine Conditions** | | | | | | |
| 1. Zone Temp °C (°F) | | | | | | |
| a. Zone 1 | 349 (661) | 351.5 (665) | 349 (660) | 328 (622) | 330 (626) | 350 (662) |
| b. Zone 2 | 336 (637) | 338 (640) | 332 (630) | 322.5 (613) | 326 (619) | 338.5 (641) |
| c. Zone 3 | 324 (616) | 340 (644) | 323 (614) | 320.5 (609) | 320.5 (609) | 323 (614) |
| d. Zone 4 | 326 (619) | 337.5 (639) | 322 (612) | 321.5 (611) | 321.5 (611) | 323 (614) |
| e. Zone 5 | 328 (623) | 340.5 (645) | 323 (614) | 323 (614) | 327 (620) | 325 (617) |
| f. Zone 6 | 323 (614) | 340.5 (645) | 324 (615) | 338.5 (641) | 339.5 (639) | 324 (615) |
| g. Zone 7 | 324 (615) | 341.5 (647) | 324.5 (616) | 321 (610) | 321 (610) | 324 (615) |
| h. Zone 8 | 324 (615) | 341 (646) | 325 (617) | 324 (615) | 325 (617) | 326 (619) |
| 2. Avg. Machine Temp °C (°F) | 326 (619) | 341 (646) | 328 (622) | 325 (617) | 326 (619) | 329.5 (625) |
| 3. Die Face Melt Temp °C (°F) | 306 (582) | 314 (598) | 310 (590) | 313.5 (597) | 301.5 (575) | 309.5 (589) |
| 4. Production Rate kg/hr (lb/hr) | 83.5 (184) | 53.6 (118) | 62.7 (138) | 136 (299) | 128 (283) | 81.7 (180) |

TABLE III (cont'd)

| Examples | 7 | 8 | 9 | 10 | 11 | 12 |
| --- | --- | --- | --- | --- | --- | --- |
| A. Composition, Wt.% | NC | NC | NC | NC | NC | IC |
| 1. PPS | | | | | | |
| Low[a] | - | - | - | - | - | - |
| High[b] | 56.5 | 56.5 | 56.5 | 56.5 | 56.5 | 56.5 |
| 2. Glass Fiber[c] | 40 | 40 | 40 | 40 | 40 | 40 |
| 3. Polyethylene, LD[d] | 1 | 1 | 1 | 1 | 1 | 1 |
| 4. Silane, 1 Wt.% of: | AMEO[h] | Z6032[i] | A189[f] | A189[f] | Y9194[e] | 1506[g] |
| 5. Mold Corrosion Inhibitor | | | | | | |
| $Li_2CO_3$ | 1 | - | 1 | - | - | 1 |
| DHT-4A[l] | - | 1 | - | 1 | 1 | - |
| 6. Pigment[m] | 0.5 | 0.5 | 0.5 | 0.5 | 0.5 | 0.5 |
| B. Properties | | | | | | |
| 1. Insulation Resistance, ohm | $9.3x10^8$ | $8.5x10^8$ | $1.3x10^9$ | $8.6x10^9$ | $2.3x10^9$ | $4.3x10^9$ |
| 2. Cracking Resistance | | | | | | |
| a. Cut and Annealed[n] Non-sprue side | 0 | 0 | 8 | 8 | 8 | 4 |
| b. Annealed and Cut[n] Non-sprue side | 0 | 0 | 6 | 8 | 5 | 1 |
| C. Machine Conditions | | | | | | |
| 1. Zone Temp °C (°F) | | | | | | |
| a. Zone 1 | 336 (637) | 333 (632) | 334 (634) | 335 (636) | 350 (662) | 351 (664) |
| b. Zone 2 | 327 (621) | 325 (617) | 326.5 (620) | 326 (619) | 330.5 (627) | 323 (614) |
| c. Zone 3 | 324 (615) | 320.5 (609) | 321 (610) | 321.5 (611) | 322.5 (613) | 323 (614) |
| d. Zone 4 | 321.5 (611) | 321.5 (611) | 321.5 (611) | 321.5 (611) | 325 (617) | 325 (617) |
| e. Zone 5 | 322 (612) | 324 (615) | 325.5 (618) | 322 (612) | 324.5 (616) | 327 621 |
| f. Zone 6 | 368 (695) | 355.5 (672) | 345 (653) | 365.5 (690) | 325 (617) | 325.5 618 |
| g. Zone 7 | 321 (610) | 321 (610) | 321 (610) | 321 (610) | 324.5 (616) | 325 (617) |
| h. Zone 8 | 323 (614) | 322.5 (613) | 322.5 (613) | 321.5 (611) | 324 (615) | 326.5 (620) |
| 2. Avg Machine Temp °C (°F) | 330.5 (627) | 327.5 (622) | 327 (621) | 329.5 (625) | 328 (623) | 328 (623) |
| 3. Die Face Melt Temp °C (°F) | 308 (586) | 310 (590) | 309.5 (589) | 310 (590) | 309.5 (589) | 309 (588) |
| 4. Production Rate kg/hr (lb/hr) | 129 (285) | 117 (258) | 128 (283) | 110 (242) | 56.8 (125) | 105 (231) |

TABLE III (cont'd)

| Examples | 13 | 14 | 15 | 16 | 17 | 18 |
|---|---|---|---|---|---|---|
| **A. Composition, Wt.%** | NC | IC | IC | IC | NC | NC |
| 1. PPS | | | | | | |
| Low[a] | - | 56.5 | - | - | - | - |
| High[b] | 56.5 | - | 56.5 | 56.5 | 56.5 | 56.5 |
| 2. Glass Fiber[c] | 40 | 40 | 40 | 40 | 40 | 40 |
| 3. Polyethylene, LD[d] | 1 | 1 | 1 | 1 | 1 | 1 |
| 4. Silane, 1 Wt.% of: | 1506[g] | 1506[g] | 1506[g] | 1506[g] | 1506[g] | 1506[g] |
| 5. Mold Corrosion Inhibitor | | | | | | |
| $Li_2CO_3$ | - | - | - | - | - | - |
| DHT-4A[l] | 1 | 1 | 1 | 1 | 1 | 1 |
| 6. Pigment[m] | 0.5 | 0.5 | 0.5 | 0.5 | 0.5 | 0.5 |
| **B. Properties** | | | | | | |
| 1. Insulation Resistance, ohm | $3x10^9$ | $2.7x10^9$ | $1.1x10^{10}$ | $2x10^{10}$ | $3.7x10^{10}$ | $1x10^{10}$ |
| 2. Cracking Resistance | | | | | | |
| a. Cut and Annealed[n] Non-sprue side | 8 | 0 | 0 | 0 | 8 | 8 |
| b. Annealed and Cut[n] Non-sprue side | 0 | 0 | 0 | 0 | 0 | 3 |
| **C. Machine Conditions** | | | | | | |
| 1. Zone Temp °C (°F) | | | | | | |
| a. Zone 1 | 335 (635) | 349 (660) | 351 (664) | 339.5 (643) | 342 (648) | 359 (678) |
| b. Zone 2 | 344 (651) | 336 (637) | 329 (624) | 308 (586) | 310.5 (591) | 364.5 (688) |
| c. Zone 3 | 321 (610) | 323 (614) | 324 (615) | 312 (594) | 313 (596) | 369.5 (697) |
| d. Zone 4 | 321.5 (611) | 327 (621) | 325 (617) | 314 (598) | 316 (601) | 371 (700) |
| e. Zone 5 | 325.5 (618) | 328 (623) | 326 (619) | 316 (601) | 324 (615) | 371 (700) |
| f. Zone 6 | 340 (644) | 327 (621) | 327 (621) | 316 (601) | 317 (603) | 371.5 (701) |
| g. Zone 7 | 321 (610) | 325 (617) | 324.5 (616) | 316 (601) | 316 (601) | 372 (702) |
| h. Zone 8 | 322.5 (613) | 326 (619) | 324 (615) | 316 (601) | 318 (605) | 371.5 (701) |
| 2. Avg Machine Temp °C (°F) | 326.5 (620) | 330.5 (627) | 329 (624) | 317 (603) | 320 (608) | 369 (696) |
| 3. Die Face Melt Temp °C (°F) | 301.5 (575) | 293 (584) | 309.5 (589) | 293 (560) | 304 (579) | 335.5 (636) |
| 4. Production Rate kg/hr (lb/hr) | 107 (236) | 69.5 (153) | 58.1 (128) | 27.7 (61) | 47.7 (105) | 56.8 (125) |

TABLE III (cont'd)

| Examples | 19 | 20 | 21 | 22 | 23 | 24 |
|---|---|---|---|---|---|---|
| A. Composition, Wt.% | NC | IC | NC | NC | IC | IC |
| 1. PPS | | | | | | |
| Low[a] | - | - | - | - | - | - |
| High[b] | 56.5 | 56.5 | 56.5 | 56.5 | 56.5 | 56.5 |
| 2. Glass Fiber[c] | 40 | 40 | 40 | 40 | 40 | 40 |
| 3. Polyethylene, LD[d] | 1 | 1 | 1 | 1 | 1 | 1 |
| 4. Silane, 1 Wt.% of: | 1506[g] | AMEO[h] | IMEO[j] | 1100[k] | 1100[k] | 1506[g] |
| 5. Mold Corrosion Inhibitor | | | | | | |
| $Li_2CO_3$ | - | - | - | - | - | - |
| DHT-4A[l] | 1 | 1 | 1 | 1 | 1 | 1 |
| 6. Pigment[m] | 0.5 | 0.5 | 0.5 | 0.5 | 0.5 | 0.5 |
| B. Properties | | | | | | |
| 1. Insulation Resistance, ohm | $1.7x10^{10}$ | $7.2x10^{10}$ | $8.5x10^{9}$ | $1.7x10^{11}$ | $3.6x10^{10}$ | $7.2x10^{9}$ |
| 2. Cracking Resistance | | | | | | |
| a. Cut and Annealed[n] Non-sprue side | 8 | 7 | 7 | 6 | 6 | 6 |
| b. Annealed and Cut[n] Non-sprue side | 4 | 0 | 2 | 3 | 1 | 0 |
| C. Machine Conditions | | | | | | |
| 1. Zone Temp °C (°F) | | | | | | |
| a. Zone 1 | 362(684) | 327(621) | 355.5(672) | 358(676) | 317(603) | 314(598) |
| b. Zone 2 | 367.5(693) | 326.5(620) | 334(633) | 339(642) | 300(572) | 300(572) |
| c. Zone 3 | 370(698) | 320.5(609) | 328(622) | 329.5(625) | 296.5(566) | 296(565) |
| d. Zone 4 | 372(702) | 321.5(611) | 325(617) | 323(614) | 295.5(564) | 294.5(562) |
| e. Zone 5 | 373(704) | 322(612) | 325(617) | 324(615) | 295.5(564) | 291.5(557) |
| f. Zone 6 | 371(700) | 372.5(703) | 323(614) | 324(615) | 293(560) | 296(565) |
| g. Zone 7 | 371(700) | 321(610) | 324(615) | 324(615) | 294(562) | 293.5(561) |
| h. Zone 8 | 368.5(695) | 321.5(611) | 323(614) | 324(615) | 299(570) | 294(562) |
| 2. Avg Machine Temp °C (°F) | 369.5(697) | 329.5(625) | 330(626) | 330.5(627) | 299(570) | 298(568) |
| 3. Die Face Melt Temp °C (°F) | 345.5(654) | 310.5(591) | 304.5(580) | 305(581) | 285(545) | 287(549) |
| 4. Production Rate kg/hr (lb/hr) | 58.1(138) | 114(252) | 91.3(201) | 94.4(208) | 27.7(61) | 40.9(90) |

Footnotes:

a. Polyphenylene sulfide, PPCo, Flow Rate 20-65

b. Polyphenylene sulfide, PPCo, Flow Rate 160-280

c. Owens-Corning Fiberglas 497

d. Allied Chemical Co., AC-6A, density 0.920, Melt Index >400, softening point 106°C (222°F), viscosity 350 cps at 140°C

e. Union Carbide Corp., Y9194, a silane defined by the general formula:

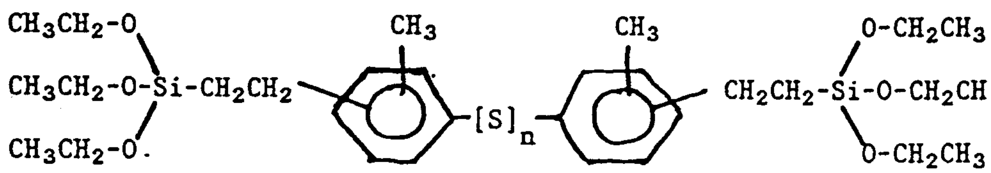

wherein n is within the range of 2 to about 4 with an average of about 2.8,

f. Union Carbide Corp., A-189, gamma-mercaptopropyltrimethoxysilane

g. Kay-Fries Inc. Dynasylan 1506, gamma-aminopropylmethyldiethoxysilane

h. Kay-Fries Inc. Dynasylan AMEO, gamma-aminopropyltriethoxysilane

i. Dow-Corning Corp., Z6032, N-{2-[3-(trimethoxysilyl)propylamino]ethyl}-p-vinylbenzylammonium chloride

j. Kay-Fries, Inc. Dynasylan IMEO, gamma-[1(4,5-dihydroimidazole)]-propyltriethoxysilane

k. Union Carbide Corp., A-1100, gamma-aminopropyltriethoxysilane

l. Kyowa Chemicals Industry Co. Ltd., DHT-4A synthetic hydrotalcite

m. Degussa, Special Black-4, Regular color Channel Black

n. Number of disks cracked out of eight tested

## Claims

### Claims for the following Contracting States : BE, CH, DE, FR, GB, IT, LI, LU, NL, SE

**1.** A composition comprising:
a) poly(arylene sulfide),
b) a reinforcing material,
c) polyethylene with a density of 0.910 to 0.940 as determined by Test Method ASTM D 1505,
d) at least one organosilane selected from Methyl 3-[2-(trimethoxysilylpropylamino)-ethylamino]-propionate, N-{2-[3-(Trimethoxysilyl)propylamino]ethyl}-p-vinylbenzylammonium chloride, and organosilanes represented by the general formula:

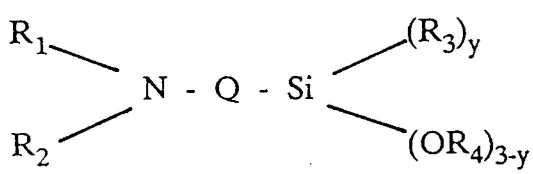

,

where $R_1$ and $R_2$ are individually one of the group consisting of hydrogen, alkyl, alkaryl, aminoalkyl, carboxyalkylaminoalkyl, aryl, aralkyl, carbamoyl, hydroxyalkyl, and vinylaralkylaminoalkyl groups containing 1 to 10 carbon atoms or where $R_1$ and $R_2$ are joined by a valence bond to form a cyclic

structure of from 5 to 16 atoms including the nitrogen atom therein, $R_3$ and $R_4$ are individually one of the group consisting of alkyl and cycloalkyl groups containing 1 to 6 carbon atoms, Q is a divalent hydrocarbon radical containing from 1 to 18 carbon atoms, and y is 0, 1 or 2, wherein said composition simultaneously exhibits

e) an electrical insulation resistance of at least 1.0 x $10^9$ ohms as determined in accordance with ASTM Test Method D257 using a conditioning period of 48 hours in a 95 ± 1° humidity chamber at 90°C, ASTM Method E104 was used for controlling relative humidity and the electrical insulation resistance was measured by employing a 500 volt potential and a GenRad Megohmeter (type 1862-C) having a capability to measure resistance up to 2 x $10^{12}$ ohm, and

f) good crack resistance as evidenced by at least nine disks out of sixteen disks passing the Internal Cracking Resistance Measurement test.

**2.** The composition of claim 1, wherein the amount of poly(arylene sulfide) is in the range of 30 to 80 parts by weight, the amount of reinforcing material is present in the range of 20 to 70 parts by weight, the amount of polyethylene is in the range of 0.5 to 10 parts by weight and the amount of organosilane is in the range of 0.1 to 5 parts by weight, wherein the components poly(arylene sulfide) and reinforcing material together make up 100 parts by weight.

**3.** The composition of claim 2, wherein the amount of poly(arylene sulfide) is in the range of 40 to 75 parts by weight, the amount of reinforcing material is present in the range of 25 to 60 parts by weight, the amount of polyethylene is in the range of 0.5 to 5 parts by weight and the amount of organosilane is in the range of 0.1 to 4 parts by weight, wherein the components poly(arylene sulfide) and reinforcing material together make up 100 parts by weight.

**4.** The composition of claim 3, wherein the amount of poly(arylene sulfide) is in the range of 50 to 70 parts by weight, the amount of reinforcing material is present in the range of 30 to 50 parts by weight, the amount of polyethylene is in the range of 0.75 to 3 parts by weight and the amount of organosilane is in the range of 0.25 to 3 parts by weight, wherein the components poly(arylene sulfide) and reinforcing material together make up 100 parts by weight.

**5.** The composition of one of the claims 1 to 4, further comprising a mold corrosion inhibitor and pigment, wherein the amount of inhibitor is in the range of 0.1 to 10 parts by weight and the amount of pigment is in the range of 0.1 to 5 parts by weight, wherein the components poly(arylene sulfide) and reinforcing material together make up 100 parts by weight.

**6.** The composition of claim 5, wherein the amount of inhibitor is in the range of 0.2 to 7 parts by weight and the amount of pigment is in the range of 0.1 to 3 parts by weight, wherein the components poly-(arylene sulfide) and reinforcing material together make up 100 parts by weight.

**7.** The composition of claim 6, wherein the amount of inhibitor is in the range of 0.5 to 5 parts by weight and the amount of pigment is in the range of 0.2 to 2 parts by weight, wherein the components poly-(arylene sulfide) and reinforcing material together make up 100 parts by weight.

**8.** The composition of one of the claims 5 to 7, wherein said pigment is channel black and said mold corrosion inhibitor is a hydrotalcite.

**9.** The composition of one of the preceding claims, wherein the reinforcing material is glass fibres.

**10.** The composition of one of the preceding claims, wherein the poly(arylene sulfide) is poly(phenylene sulfide) having a melt flow of less than 400 g/10 min, as measured by ASTM D1238 using a 5 kg weight at 315°C (600°F) through a 2.1 mm (0.0825 inch) diameter orifice wherein the reinforcing material is glass fibers suitable for electrical applications, and wherein the organosilane is one of the group consisting of:
3-Aminopropyltrimethoxysilane,
3-Aminopropyltriethoxysilane,
3-Aminopropylmethyldiethoxysilane,
N-Phenyl-3-aminopropyltrimethoxysilane,
p-Aminophenyltrimethoxysilane,

3-(Diethylamino)propylthmethoxysilane,
N-beta-(Aminoethyl)-gamma-aminopropyltrimethoxysilane,
N-(2-Aminoethyl)-N'-[(3-trimethoxysilyl)propyl]-1,2-ethanediamine,
N-(3-Aminopropyl)-N'-[trimethoxysilyl)methyl]-1,3-propanediamine,
Methyl 3-[2-(trimethoxysilylpropylamino)-ethylamino]-propionate,
N-{2-[3-(Trimethoxysilyl)propylamino]ethyl}-p-vinylbenzylammonium chloride,
N-bis-(2-Hydroxyethyl)-3-aminopropyltriethoxysilane,
gamma-Ureidopropyltriethyloxysilane, and
gamma-[1-(4,5-Dihydroimidazole)]-propyltriethoxysilane.

**11.** A process for producing the composition of one of the preceding claims wherein the poly(arylene sulfide), the reinforcing material, the polyethylene, and the at least one organosilane are dry mixed together to produce a blend and the blend is melt extruded to produce the composition wherein the melt extrusion is carried out at an average machine temperature of less than 357 ° C (675 ° F).

**12.** The process of claim 11, wherein the average machine temperature is less than 343 ° C (650 ° F).

**13.** The process of claim 12, wherein the average machine temperature is less than 332 ° C (630 ° F).

**Claims for the following Contracting State : AT**

**1.** A process for producing a composition comprising mixing together
a) poly(arylene sulfide),
b) a reinforcing material,
c) polyethylene with a density of 0.910 to 0.940 as determined by Test Method ASTM D 1505,
d) at least one organosilane selected from Methyl 3-[2-(trimethoxysilylpropylamino)-ethylamino]-propionate, N-{2-[3-(Trimethoxysilyl)propylamino]ethyl}-p-vinylbenzylammonium chloride, and organosilanes represented by the general formula:

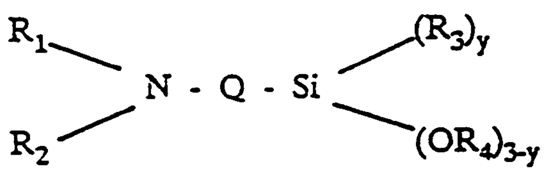

,

where
$R_1$ and $R_2$ are individually one of the group consisting of hydrogen, alkyl, alkaryl, aminoalkyl, carboxyalkylaminoalkyl, aryl, aralkyl, carbamoyl, hydroxyalkyl, and vinylaralkylaminoalkyl groups containing 1 to 10 carbon atoms or where $R_1$ and $R_2$ are joined by a valence bond to form a cyclic structure of from 5 to 16 atoms including the nitrogen atom therein, $R_3$ and $R_4$ are individually one of the group consisting of alkyl and cycloalkyl groups containing 1 to 6 carbon atoms, Q is a divalent hydrocarbon radical containing from 1 to 18 carbon atoms, and y is 0, 1 or 2,
to produce a composition wherein said composition simultaneously exhibits
e) an electrical insulation resistance of at least 1.0 x $10^9$ ohms as determined in accordance with ASTM Test Method D257 using a conditioning period of 48 hours in a 95±1 ° humidity chamber at 90 ° C, ASTM Method E104 was used for controlling relative humidity and the electrical insulation resistance was measured by employing a 500 volt potential and a GenRad Megohmeter (type 1862-C) having a capability to measure resistance up to 2 x $10^{12}$ ohm, and
f) good crack resistance as evidenced by at least nine disks out of sixteen disks passing the Internal Cracking Resistance Measurement test.

**2.** The process of claim 1, wherein the amount of poly(arylene sulfide) is in the range of 30 to 80 parts by weight, the amount of reinforcing material is present in the range of 20 to 70 parts by weight, the amount of polyethylene is in the range of 0.5 to 10 parts by weight and the amount of organosilane is

in the range of 0.1 to 5 parts by weight, wherein the components poly(arylene sulfide) and reinforcing material together make up 100 parts by weight.

3. The process of claim 2, wherein the amount of poly(arylene sulfide) is in the range of 40 to 75 parts by weight, the amount of reinforcing material is present in the range of 25 to 60 parts by weight, the amount of polyethylene is in the range of 0.5 to 5 parts by weight and the amount of organosilane is in the range of 0.1 to 4 parts by weight, wherein the components poly(arylene sulfide) and reinforcing material together make up 100 parts by weight.

4. The process of claim 3, wherein the amount of poly(arylene sulfide) is in the range of 50 to 70 parts by weight, the amount of reinforcing material is present in the range of 30 to 50 parts by weight, the amount of polyethylene is in the range of 0.75 to 3 parts by weight and the amount of organosilane is in the range of 0.25 to 3 parts by weight, wherein the components poly(arylene sulfide) and reinforcing material together make up 100 parts by weight.

5. The process of one of the claims 1 to 4, further comprising mixing together with a mold corrosion inhibitor and pigment, wherein the amount of inhibitor is in the range of 0.1 to 10 parts by weight and the amount of pigment is in the range of 0.1 to 5 parts by weight, wherein the components poly(arylene sulfide) and reinforcing material together make up 100 parts by weight, to produce the composition.

6. The process of claim 5, wherein the amount of inhibitor is in the range of 0.2 to 7 parts by weight and the amount of pigment is in the range of 0.1 to 3 parts by weight, wherein the components poly(arylene sulfide) and reinforcing material together make up 100 parts by weight, to produce the composition.

7. The process of claim 6, wherein the amount of inhibitor is in the range of 0.5 to 5 parts by weight and the amount of pigment is in the range of 0.2 to 2 parts by weight, wherein the components poly(arylene sulfide) and reinforcing material together make up 100 parts by weight, to produce the composition.

8. The process of one of the claims 5 to 7, wherein said pigment is channel black and said mold corrosion inhibitor is a hydrotalcite.

9. The process of one of the preceding claims, wherein the reinforcing material is glass fibres.

10. The process of one of the preceding claims, wherein the poly(arylene sulfide) is poly(phenylene sulfide) having a melt flow of less than 400 g/10 min, as measured by ASTM D1238 using a 5 kg weight at 315° C (600° F) through a 2.1 mm (0.0825 inch) diameter orifice wherein the reinforcing material is glass fibers suitable for electrical applications, and wherein the organosilane is one of the group consisting of:
3-Aminopropyltrimethoxysilane,
3-Aminopropyltriethoxysilane,
3-Aminopropylmethyldiethoxysilane,
N-Phenyl-3-aminopropyltrimethoxysilane,
p-Aminophenyltrimethoxysilane,
3-(Diethylamino)propyltrimethoxysilane,
N-beta-(Aminoethyl)-gamma-aminopropyltrimethoxysilane,
N-(2-Aminoethyl)-N'-[(3-trimethoxysilyl)propyl]-1,2-ethanediamine,
N-(3-Aminopropyl)-N'-[(trimethoxysilyl)methyl]-1,3-propanediamine,
Methyl 3-[2-(trimethoxysilylpropylamino)-ethylamino]-propionate,
N-{2-[3-(Trimethoxysilyl)propylamino]ethyl}-p-vinylbenzylammonium chloride,
N-bis-(2-Hydroxyethyl)-3-aminopropyltriethoxysilane,
gamma-Ureidopropyltriethyloxysilane, and
gamma-[1-(4,5-Dihydroimidazole)]-propyltriethoxysilane.

11. The process of one of the preceding claims wherein the poly(arylene sulfide), the reinforcing material, the polyethylene, and the at least one organosilane are dry mixed together to produce a blend and the blend is melt extruded to produce the composition wherein the melt extrusion is carried out at an average machine temperature of less than 357° C (675° F).

**12.** The process of claim 11, wherein the average machine temperature is less than 343° C (650° F).

**13.** The process of claim 12, wherein the average machine temperature is less than 332° C (630° F).

**Patentansprüche**
**Patentansprüche für folgende Vertragsstaaten : BE, CH, DE, FR, GB, IT, LI, LU, NL, SE**

**1.** Zusammensetzung, umfassend:
a) Poly-(arylensulfid),
b) ein Verstärkungsmaterial,
c) Polyethylen mit einer nach der ASTM-Methode D 1505 bestimmten Dichte von 0,910 bis 0,940,
d) mindestens ein Organosilan, ausgewählt aus Methyl-3-[2-(trimethoxysilylpropylamino)-ethylamino]-propionat, N-{2-[3-(Trimethoxysilyl)-propylamino]-ethyl}-p-vinylbenzylammoniumchlorid und Organosilanen, die durch die folgende allgemeine Formel dargestellt werden:

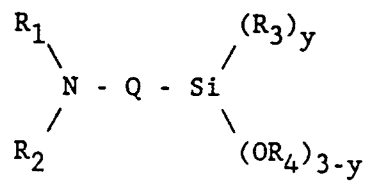

wobei $R_1$ und $R_2$ einzeln aus der Gruppe Wasserstoff, Alkyl-, Alkaryl-, Aminoalkyl-, Carboxyalkylaminoalkyl-, Aryl-, Aralkyl-, Carbamoyl-, Hydroxyalkyl- und Vinylaralkylaminoalkylgruppen mit 1 bis 10 Kohlenstoffatomen ausgewählt sind oder wobei $R_1$ und $R_2$ durch eine Valenzbindung verknüpft sind, wobei eine cyclische Struktur mit 5 bis 16 Atomen unter Einschluß des Stickstoffatoms gebildet wird, wobei $R_3$ und $R_4$ einzeln aus der Gruppe Alkyl- und Cycloalkylgruppen mit 1 bis 6 Kohlenstoffatomen ausgewählt sind, Q ein zweiwertiger Kohlenwasserstoffrest mit 1 bis 18 Kohlenstoffatomen ist und y die Werte 0, 1 oder 2 annimmt, wobei die Zusammensetzung gleichzeitig folgende Eigenschaften aufweist:
e) einen elektrischen Isolierungswiderstand von mindestens 1,0 x $10^9$ Ohm, der gemäß der ASTM-Methode D257 unter Verwendung einer Nachhärtungsfrist von 48 Stunden in einer Kammer mit 95 ± 1 % relativer Luftfeuchtigkeit bei 90°C bestimmt wird, wobei die ASTM-Methode E104 zur Kontrolle der relativen Luftfeuchtigkeit verwendet wird und der elektrische Isolierungswiderstand unter Verwendung einer Spannung von 500 Volt und eines "GenRad Megohmeter" (Typ 1862-C) mit der Fähigkeit, Widerstände bis zu 2 x $10^{12}$ Ohm zu messen, gemessen wird, und
f) eine gute Rißbildungsbeständigkeit, die dadurch belegt wird, daß mindestens neun von sechzehn Scheiben den Test zur Messung der inneren Rißbildungsbeständigkeit bestehen.

**2.** Zusammensetzung nach Anspruch 1, wobei die Menge des Poly-(arylensulfids) im Bereich von 30 bis 80 Gewichtsteilen liegt, die Menge des Verstärkungsmaterials im Bereich von 20 bis 70 Gewichtsteilen liegt, die Menge des Polyethylens im Bereich von 0,5 bis 10 Gewichtsteilen liegt und die Menge des Organosilans im Bereich von 0,1 bis 5 Gewichtsteilen liegt, wobei die Komponenten Poly-(arylensulfid) und Verstärkungsmaterial zusammen 100 Gewichtsteile ausmachen.

**3.** Zusammensetzung nach Anspruch 2, wobei die Menge des Poly-(arylensulfids) im Bereich von 40 bis 75 Gewichtsteilen liegt, die Menge des Verstärkungsmaterials im Bereich von 25 bis 60 Gewichtsteilen liegt, die Menge des Polyethylens im Bereich von 0,5 bis 5 Gewichtsteilen liegt und die Menge des Organosilans im Bereich von 0,1 bis 4 Gewichtsteilen liegt, wobei die Komponenten Poly-(arylensulfid) und Verstärkungsmaterial zusammen 100 Gewichtsteile ausmachen.

**4.** Zusammensetzung nach Anspruch 3, wobei die Menge des Poly-(arylensulfids) im Bereich von 50 bis 70 Gewichtsteilen liegt, die Menge des Verstärkungsmaterials im Bereich von 30 bis 50 Gewichtsteilen liegt, die Menge des Polyethylens im Bereich von 0,75 bis 3 Gewichtsteilen liegt und die Menge des Organosilans im Bereich von 0,25 bis 3 Gewichtsteilen liegt, wobei die Komponenten Poly-(arylensulfid) und Verstärkungsmaterial zusammen 100 Gewichtsteile ausmachen.

**5.** Zusammensetzung nach einem der Ansprüche 1 bis 4, ferner umfassend ein Korrosionsinhibitor für die Form und ein Pigment, wobei die Menge des Korrosionsinhibitors im Bereich von 0,1 bis 10 Gewichtsteilen liegt und die Menge des Pigments im Bereich von 0,1 bis 5 Gewichtsteilen liegt, wobei die Komponenten Poly-(arylensulfid) und Verstärkungsmaterial zusammen 100 Gewichtsteile ausmachen.

**6.** Zusammensetzung nach Anspruch 5, wobei die Menge des Korrosionsinhibitors im Bereich von 0,2 bis 7 Gewichtsteilen liegt und die Menge des Pigments im Bereich von 0,1 bis 3 Gewichtsteilen liegt, wobei die Komponenten Poly-(arylensulfid) und Verstärkungsmaterial zusammen 100 Gewichtsteile ausmachen.

**7.** Zusammensetzung nach Anspruch 6, wobei die Menge des Korrosionsinhibitors im Bereich von 0,5 bis 5 Gewichtsteilen liegt und die Menge des Pigments im Bereich von 0,2 bis 2 Gewichtsteilen liegt, wobei die Komponenten Poly-(arylensulfid) und Verstärkungsmaterial zusammen 100 Gewichtsteile ausmachen.

**8.** Zusammensetzung nach einem der Ansprüche 5 bis 7, wobei es sich bei dem Pigment um Kanalruß und bei dem Korrosionsinhibitor für die Form um ein Hydrotalkit handelt.

**9.** Zusammensetzung nach einem der vorstehenden Ansprüche, wobei es sich bei dem Verstärkungsmaterial um Glasfasern handelt.

**10.** Zusammensetzung nach einem der vorstehenden Ansprüche, wobei es sich bei dem Poly-(arylensulfid) um Poly-(phenylensulfid) mit einem Schmelzindex von weniger als 400 g/10 min handelt, wobei dieser Wert nach ASTM D-1238 bei 315 °C (600 °F) unter Verwendung eines Gewichts von 5 Kilogramm und einer Öffnung von 2,1 mm (0,0825 Zoll) Durchmesser gemessen wird, wobei es sich bei dem Verstärkungsmaterial um für elektrotechnische Anwendungen geeignete Glasfasern handelt, und wobei das Organosilan aus der folgenden Gruppe ausgewählt ist:
3-Aminopropyltrimethoxysilan,
3-Aminopropyltriethoxysilan,
3-Aminopropylmethyldiethoxysilan,
N-Phenyl-3-aminopropyltrimethoxysilan,
p-Aminophenyltrimethoxysilan,
3-(Diethylamino)-propyltrimethoxysilan,
N-beta-(Aminoethyl)-gamma-aminopropyltrimethoxysilan,
N-(2-Aminoethyl)-N'-[(3-trimethoxysilyl)propyl]-1,2-ethandiamin,
N-(3-Aminopropyl)-N'-[(trimethoxysilyl)-methyl]-1,3-propandiamin,
Methyl-3-[2-(trimethoxysilylpropylamino)-ethylamino]-propionat,
N-{2-[3-(Trimethoxysilyl)-propylamino]-ethyl}-p-vinylbenzylammoniumchlorid
N-Bis-(2-hydroxyethyl)-3-aminopropyltriethoxysilan,
gamma-Ureidopropyltriethyloxysilan und
gamma-[1-(4,5-Dihydroimidazol)]-propyltriethoxysilan.

**11.** Verfahren zur Herstellung der Zusammensetzung nach einem der vorstehenden Ansprüche, wobei das Poly-(arylensulfid), das Verstärkungsmaterial, das Polyethylen und das mindestens eine Organosilan trocken gemischt werden, um ein Gemisch zu erhalten, und wobei das Gemisch als Schmelze extrudiert wird, um die Zusammensetzung herzustellen, wobei die Extrusion der Schmelze bei einer mittleren Maschinentemperatur von weniger als 357 °C (675 °F) durchgeführt wird.

**12.** Verfahren nach Anspruch 11, wobei die mittlere Maschinentemperatur weniger als 343 °C (650 °F) beträgt.

**13.** Verfahren nach Anspruch 12, wobei die mittlere Maschinentemperatur weniger als 332 °C (630 °F) beträgt.

**Patentansprüche für folgenden Vertragsstaat : AT**

1. Verfahren zur Herstellung einer Zusammensetzung, umfassend das Vermischen folgender Bestandteile:
   a) Poly-(arylensulfid),
   b) ein Verstärkungsmaterial,
   c) Polyethylen mit einer nach der ASTM-Methode D 1505 bestimmten Dichte von 0,910 bis 0,940,
   d) mindestens ein Organosilan, ausgewählt aus Methyl-3-[2-(trimethoxysilylpropylamino)-ethylamino]-propionat, N-{2-[3-(Trimethoxysilyl)-propylamino]-ethyl}-p-vinylbenzylammoniumchlorid und Organosilanen, die durch die folgende allgemeine Formel dargestellt werden:

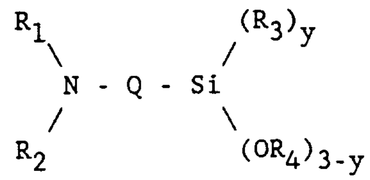

   wobei $R_1$ und $R_2$ einzeln aus der Gruppe Wasserstoff, Alkyl-, Alkaryl-, Aminoalkyl-, Carboxyalkylaminoalkyl-, Aryl-, Aralkyl-, Carbamoyl-, Hydroxyalkyl- und Vinylaralkylaminoalkylgruppen mit 1 bis 10 Kohlenstoffatomen ausgewählt sind oder wobei $R_1$ und $R_2$ durch eine Valenzbindung verknüpft sind, wobei eine cyclische Struktur mit 5 bis 16 Atomen unter Einschluß des Stickstoffatoms gebildet wird, wobei $R_3$ und $R_4$ einzeln aus der Gruppe Alkyl- und Cycloalkylgruppen mit 1 bis 6 Kohlenstoffatomen ausgewählt sind, Q ein zweiwertiger Kohlenwasserstoffrest mit 1 bis 18 Kohlenstoffatomen ist und y die Werte 0, 1 oder 2 annimmt, um eine Zusammensetzung herzustellen, wobei die Zusammensetzung gleichzeitig folgende Eigenschaften aufweist:
   e) einen elektrischen Isolierungswiderstand von mindestens 1,0 x $10^9$ Ohm, der gemäß der ASTM-Methode D257 unter Verwendung einer Nachhärtungsfrist von 48 Stunden in einer Kammer mit 95 ± 1 % relativer Luftfeuchtigkeit bei 90 °C bestimmt wird, wobei die ASTM-Methode E104 zur Kontrolle der relativen Luftfeuchtigkeit verwendet wird und der elektrische Isolierungswiderstand unter Verwendung einer Spannung von 500 Volt und eines "GenRad Megohmeter" (Typ 1862-C) mit der Fähigkeit, Widerstände bis zu 2 x $10^{12}$ Ohm zu messen, gemessen wird, und
   f) eine gute Rißbildungsbeständigkeit, die dadurch belegt wird, daß mindestens neun von sechzehn Scheiben den Test zur Messung der inneren Rißbildungsbeständigkeit bestehen.

2. Verfahren nach Anspruch 1, wobei die Menge des Poly-(arylensulfids) im Bereich von 30 bis 80 Gewichtsteilen liegt, die Menge des Verstärkungsmaterials im Bereich von 20 bis 70 Gewichtsteilen liegt, die Menge des Polyethylens im Bereich von 0,5 bis 10 Gewichtsteilen liegt und die Menge des Organosilans im Bereich von 0,1 bis 5 Gewichtsteilen liegt, wobei die Komponenten Poly-(arylensulfid) und Verstärkungsmaterial zusammen 100 Gewichtsteile ausmachen.

3. Verfahren nach Anspruch 2, wobei die Menge des Poly-(arylensulfids) im Bereich von 40 bis 75 Gewichtsteilen liegt, die Menge des Verstärkungsmaterials im Bereich von 25 bis 60 Gewichtsteilen liegt, die Menge des Polyethylens im Bereich von 0,5 bis 5 Gewichtsteilen liegt und die Menge des Organosilans im Bereich von 0,1 bis 4 Gewichtsteilen liegt, wobei die Komponenten Poly-(arylensulfid) und Verstärkungsmaterial zusammen 100 Gewichtsteile ausmachen.

4. Verfahren nach Anspruch 3, wobei die Menge des Poly-(arylensulfids) im Bereich von 50 bis 70 Gewichtsteilen liegt, die Menge des Verstärkungsmaterials im Bereich von 30 bis 50 Gewichtsteilen liegt, die Menge des Polyethylens im Bereich von 0,75 bis 3 Gewichtsteilen liegt und die Menge des Organosilans im Bereich von 0,25 bis 3 Gewichtsteilen liegt, wobei die Komponenten Poly-(arylensulfid) und Verstärkungsmaterial zusammen 100 Gewichtsteile ausmachen.

5. Verfahren nach einem der Ansprüche 1 bis 4, ferner umfassend das Vermischen mit einem Korrosionsinhibitor für die Form und einem Pigment, wobei die Menge des Korrosionsinhibitors im Bereich von 0,1 bis 10 Gewichtsteilen liegt und die Menge des Pigments im Bereich von 0,1 bis 5 Gewichtsteilen liegt, wobei die Komponenten Poly-(arylensulfid) und Verstärkungsmaterial zusammen 100 Gewichtsteile ausmachen, um die Zusammensetzung herzustellen.

6. Verfahren nach Anspruch 5, wobei die Menge des Korrosionsinhibitors im Bereich von 0,2 bis 7 Gewichtsteilen liegt und des Menge des Pigments im Bereich von 0,1 bis 3 Gewichtsteilen liegt, wobei die Komponenten Poly-(arylensulfid) und Verstärkungsmaterial zusammen 100 Gewichtsteile ausmachen, um die Zusammensetzung herzustellen.

7. Verfahren nach Anspruch 6, wobei die Menge des Korrosionsinhibitors im Bereich von 0,5 bis 5 Gewichtsteilen liegt und des Menge des Pigments im Bereich von 0,2 bis 2 Gewichtsteilen liegt, wobei die Komponenten Poly-(arylensulfid) und Verstärkungsmaterial zusammen 100 Gewichtsteile ausmachen, um die Zusammensetzung herzustellen.

8. Verfahren nach einem der Ansprüche 5 bis 7, wobei es sich bei dem Pigment um Kanalruß und bei dem Korrosionsinhibitor für die Form um ein Hydrotalkit handelt.

9. Verfahren nach einem der vorstehenden Ansprüche, wobei es sich bei dem Verstärkungsmaterial um Glasfasern handelt.

10. Verfahren nach einem der vorstehenden Ansprüche, wobei es sich bei dem Poly-(arylensulfid) um Poly-(phenylensulfid) mit einem Schmelzindex von weniger als 400 g/10 min handelt, wobei dieser Wert nach ASTM D-1238 bei 315°C (600°F) unter Verwendung eines Gewichts von 5 Kilogramm und einer Öffnung von 2,1 mm (0,0825 Zoll) Durchmesser gemessen wird, wobei es sich bei dem Verstärkungsmaterial um für elektrotechnische Anwendungen geeignete Glasfasern handelt, und wobei das Organosilan aus der folgenden Gruppe ausgewählt ist:
3-Aminopropyltrimethoxysilan,
3-Aminopropyltriethoxysilan,
3-Aminopropylmethyldiethoxysilan,
N-Phenyl-3-aminopropyltrimethoxysilan,
p-Aminophenyltrimethoxysilan,
3-(Diethylamino)-propyltrimethoxysilan,
N-beta-(Aminoethyl)-gamma-aminopropyltrimethoxysilan,
N-(2-Aminoethyl)-N'-[(3-trimethoxysilyl)-propyl]-1,2-ethandiamin,
N-(3-Aminopropyl)-N'-[(trimethoxysilyl)-methyl]-1,3-propandiamin,
Methyl-3-[2-(trimethoxysilylpropylamino)-ethylamino]-propionat,
N-{2-[3-(Trimethoxysilyl)-propylamino]-ethyl}-p-vinylbenzylammoniumchlorid
N-Bis-(2-hydroxyethyl)-3-aminopropyltriethoxysilan,
gamma-Ureidopropyltriethyloxysilan und
gamma-[1-(4,5-Dihydroimidazol)]-propyltriethoxysilan.

11. Verfahren nach einem der vorstehenden Ansprüche, wobei das Poly(arylensulfid), das Verstärkungsmaterial, das Polyethylen und das mindestens eine Organosilan trocken gemischt werden, um ein Gemisch zu erhalten, und wobei das Gemisch als Schmelze extrudiert wird, um die Zusammensetzung herzustellen, wobei die Extrusion der Schmelze bei einer mittleren Maschinentemperatur von weniger als 357°C (675°F) durchgeführt wird.

12. Verfahren nach Anspruch 11, wobei die mittlere Maschinentemperatur weniger als 343°C (650°F) beträgt.

13. Verfahren nach Anspruch 12, wobei die mittlere Maschinentemperatur weniger als 332°C (630°F) beträgt.

**Revendications**
**Revendications pour les Etats contractants suivants : BE, CH, DE, FR, GB, IT, LI, LU, NL, SE**

1. Une composition comprenant :
a) un poly(sulfure d'arylène),
b) une matière de renforcement,
c) du polyéthylène ayant une densité de 0,910 à 0,940 comme déterminé par la méthode d'essai ASTM D1505.

d) au moins un organosilane choisi parmi le propionate de méthyl-3-[2-(triméthoxysilylpropylamino)-éthylamino],
le chlorure de N-{2-[3-(Triméthoxysilyl)propylamino] éthyl}-p-vinylbenzylammonium,
et les organosilanes représentés par la formule générale:

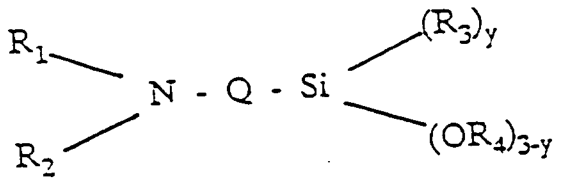

où

$R_1$ et $R_2$ sont individuellement un radical du groupe comprenant de l'hydrogène, un radical alkyle, alkaryle, aminoalkyle, carboxyalkylaminoalkyle, aryle, aralkyle, carbamoyle, hydroxyalkyle, et vinylaralkylaminoalkyle renfermant de 1 à 10 atomes de carbone ou lorsque $R_1$ et $R_2$ sont réunis par une liaison covalente pour former une structure cyclique d'environ 5 à 16 atomes y compris l'atome d'azote, $R_3$ et $R_4$ sont individuellement un radical du groupe comprenant les radicaux alkyle et cycloalkyle contenant de 1 à 6 atomes de carbone, Q est un radical hydrocarboné bivalent contenant de 1 à 18 atomes de carbone et y est 0, 1 ou 2, dans laquelle ladite composition présente simultanément:

e) une résistance d'isolation électrique d'au moins 1,0 x $10^9$ ohms comme déterminé selon la méthode d'essai ASTM D257 en utilisant une période de conditionnement de 48 heures dans une chambre à 90°C à humidité de 95 ± 1°, la méthode ASTM E104 est utilisée pour contrôler l'humidité relative et la résistance d'isolation électrique est mesurée en utilisant un potentiel de 500 voltset un mégohmètre (type 1862-C) GenRad ayant une capacité de mesure de résistance jusqu'à 2 x $10^{12}$ ohms et

f) une bonne résistance à la fissuration comme mise en évidence par au moins neuf disques sur seize disques satisfaisants à l'Essai de Mesure de Résistance à la Fissuration Interne.

**2.** La composition selon la revendication 1 dans laquelle la quantité de poly(sulfure d'arylène) est comprise dans la gamme de 30 à 80 parties en poids, la quantité de matière de renforcement est présente dans la gamme de 20 à 70 parties en poids, la quantité de polyéthylène est comprise dans la gamme de 0,5 à 10 parties en poids et la quantité d'organosilane est comprise dans la gamme de 0,1 à 5 parties en poids, composition dans laquelle les constituants de poly(sulfure d'arylène) et de la matière de renforcement constituent ensemble 100 parties en poids.

**3.** La composition selon la revendication 2 dans laquelle la quantité de poly(sulfure d'arylène) est comprise dans la gamme de 40 à 75 parties en poids, la quantité de matière de renforcement est présente dans la gamme de 25 à 60 parties en poids, la quantité de polyéthylène est comprise dans la gamme de 0,5 à 5 parties en poids et la quantité d'organosilane est comprise dans la gamme de 0,1 à 4 parties en poids, composition dans laquelle les constituants de poly(sulfures d'arylène) et de la matière de renforcement constituent ensemble 100 parties en poids.

**4.** La composition selon la revendication 3 dans laquelle la quantité de poly(sulfure d'arylène) est comprise dans la gamme de 50 à 70 parties en poids, la quantité de matière de renforcement est présente dans la gamme de 30 à 50 parties en poids, la quantité de polyéthylène est comprise dans la gamme de 0,75 à 3 parties en poids et la quantité d'organosilane est comprise dans la gamme de 0,25 à 3 parties en poids, composition dans laquelle les constituants de poly(sulfure d'arylène) et de matière de renforcement constituent ensemble 100 parties en poids.

**5.** La composition selon l'une des revendications 1 à 4 comprenant, en outre, un inhibiteur de corrosion de moule et un pigment, dans laquelle la quantité d'inhibiteur est comprise dans la gamme de 0,1 à 10 parties en poids et la quantité de pigment est comprise dans la gamme de 0,1 à 5 parties en poids, composition dans laquelle les constituants de poly(sulfure d'arylène) et de matière de renforcement constituent ensemble 100 parties en poids.

6. La composition selon la revendication 5, dans laquelle la quantité d'inhibiteur est comprise dans la gamme de 0,2 à 7 parties en poids et la quantité de pigment est comprise dans la gamme de 0,1 à 3 parties en poids, composition dans laquelle les constituants de poly(sulfure d'arylène) et la matière de renforcement constituent ensemble 100 parties en poids.

7. La composition selon la revendication 6 dans laquelle la quantité d'inhibiteur est comprise dans la gamme de 0,5 à 5 parties en poids et la quantité de pigment est comprise dans la gamme de 0,2 à 2 parties en poids, composition dans laquelle les constituants de poly(sulfure d'arylène) et de matière de renforcement constituent ensemble 100 parties en poids.

8. La composition selon l'une quelconque des revendications 5 à 7, dans laquelle le pigment est du noir de carbone au tunnel et l'inhibiteur de corrosion du moule est une hydrotalcite.

9. La composition selon l'une quelconque des revendications précédentes dans laquelle la matière de renforcement est des fibres de verre.

10. La composition selon l'une des revendications précédentes dans laquelle le poly(sulfure d'arylène) est le poly(sulfure de phénylène) ayant un écoulement à l'état fondu inférieur à 400 g/10 mn comme mesuré par la norme ASTM D1238 en utilisant un poids de 5 kg à 315 °C (600 °F) au travers d'un orifice d'un diamètre de 2,1 mm (0,0825 pouce), dans laquelle la matière de renforcement est des fibres de verre appropriées pour des applications électriques et dans laquelle l'organosilane est un élément du groupe choisi parmi :
le 3-Aminopropyltriméthoxysilane,
le 3-Aminopropyltriéthoxysilane,
le 3-Aminopropylméthyldiéthoxysilane,
le N-Phényl-3-aminopropyltriméthoxysilane,
le p-Aminophényltriméthoxysilane,
le 3-(Diéthylamino)propyltriméthoxysilane,
le N-béta-(Aminoéthyl-gamma-aminopropyltriméthoxysilane,
la N-(2-Aminoéthyl)-N'[(3-triméthoxysilyl)propyl]-1,2-éthanediamine,
la N-(3-Aminopropyl)-N'-[(triméthoxysilyl)méthyl]-1,3-propanediamine,
le propionate de méthyl-3-[2-(triméthoxysilylpropylamino)-éthylamino],
le chlorure de N-{2-[3-(Triméthoxysilyl)propylamino) éthyl}-p-vinylbenzylammonium,
le N-bis-(2-Hydroxyéthyl)-3-aminopropyltriéthoxysilane, le gamma-Uréidopropyltriéthyloxysilane et
le gamma-[1-(4,5-Dihydroimidazole)]-propyltriéthoxysilane.

11. Un procédé d'obtention de la composition selon l'une quelconque des revendications précédentes dans lequel le poly(sulfure d'arylène), la matière de renforcement, le polyéthylène et au moins un organosilane sont malaxés à sec ensemble pour produire un mélange et le mélange est extrudé à l'état fondu pour produire la composition dans laquelle l'extrusion à l'état fondu est mise en oeuvre à une température moyenne de la machine inférieure à 350 °C (675 °F).

12. Le procédé selon la revendication 11, dans lequel la température moyenne de la machine est inférieure à 343 °C (650 °F).

13. Le procédé selon la revendication 12, dans lequel la température moyenne de la machine est inférieure à 332 °C (630 °F).

**Revendications pour l'Etat contractant suivant : AT**

1. Un procédé pour produire une composition consistant à mélanger ensemble :
   a) un poly(sulfure d'arylène),
   b) une matière de renforcement,
   c) du polyéthylène ayant une densité de 0,910 à 0,940 comme déterminé par la méthode d'essai ASTM D1505.
   d) au moins un organosilane choisi parmi le propionate de méthyle-3-[2-(triméthoxysilylpropylamino)-éthylamino],
   le chlorure de N-{2-[3-(Triméthoxysilyl)propylamino] éthyl}-p-vinylbenzylammonium,

et les organosilanes représentés par la formule générale:

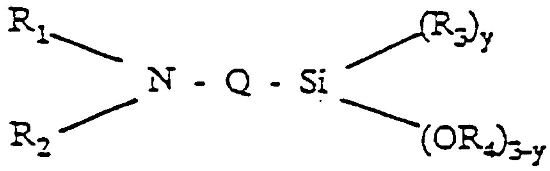

où $R_1$ et $R_2$ sont individuellement un radical du groupe comprenant de l'hydrogène, un radical alkyle, alkaryle, aminoalkyle, carboxyalkylaminoalkyle, aryle, aralkyle, carbamoyle, hydroxyalkyle, et vinylaralkylaminoalkyle renfermant de 1 à 10 atomes de carbone ou lorsque $R_1$ et $R_2$ sont réunis par une liaison covalente pour former une structure cyclique d'environ 5 à 16 atomes y compris l'atome d'azote, $R_3$ et $R_4$ sont individuellement un radical du groupe comprenant les radicaux alkyle et cycloalkyle contenant de 1 à 6 atomes de carbone, Q est un radical hydrocarboné bivalent contenant de 1 à 18 atomes de carbone et y est 0, 1 ou 2, pour obtenir une composition dans laquelle ladite composition présente simultanément:

e) une résistance d'isolation électrique d'au moins $1,0 \times 10^9$ ohms comme déterminé selon la méthode d'essai ASTM D257 en utilisant une période de conditionnement de 48 heures dans une chambre à 90°C à humidité de 95 ± 1°, la méthode ASTM E104 est utilisée pour contrôler l'humidité relative et la résistance d'isolation électrique est mesurée en utilisant un potentiel de 500 volts et un mégohmètre (type 1862-C) GenRad ayant une capacité de mesure de résistance jusqu'à $2 \times 10^{12}$ ohms et

f) une bonne résistance à la fissuration comme mise en évidence par au moins neuf disques sur seize disques satisfaisants à l'Essai de Mesure de Résistance à la Fissuration Interne.

**2.** Le procédé selon la revendication 1 dans lequel la quantité de poly(sulfure d'arylène) est comprise dans la gamme de 30 à 80 parties en poids, la quantité de matière de renforcement est présente dans la gamme de 20 à 70 parties en poids, la quantité de polyéthylène est comprise dans la gamme de 0,5 à 10 parties en poids et la quantité d'organosilane est comprise dans la gamme de 0,1 à 5 parties en poids, composition dans laquelle les constituants de poly(sulfures d'arylène) et de la matière de renforcement constituent ensemble jusqu'à 100 parties en poids.

**3.** Le procédé selon la revendication 2 dans lequel la quantité de poly(sulfure d'arylène) est comprise dans la gamme de 40 à 75 parties en poids, la quantité de matière de renforcement est présente dans la gamme de 25 à 60 parties en poids, la quantité de polyéthylène est comprise dans la gamme de 0,5 à 5 parties en poids et la quantité d'organosilane est comprise dans la gamme de 0,1 à 4 parties en poids, composition dans laquelle les constituants de poly(sulfures d'arylène) et de la matière de renforcement constituent ensemble 100 parties en poids.

**4.** Le procédé selon la revendication 3 dans lequel la quantité de poly(sulfure d'arylène) est comprise dans la gamme de 50 à 70 parties en poids, la quantité de matière de renforcement est présente dans la gamme de 30 à 50 parties en poids, la quantité de polyéthylène est comprise dans la gamme de 0,75 à 3 parties en poids et la quantité d'organosilane est comprise dans la gamme de 0,25 à 3 parties en poids, composition dans laquelle les constituants de poly(sulfure d'arylène) et de matière de renforcement constituent ensemble 100 parties en poids.

**5.** Le procédé selon l'une des revendications 1 à 4 comprenant, en outre, un inhibiteur de corrosion de moule et un pigment, dans lequel la quantité d'inhibiteur est comprise dans la gamme de 0,1 à 10 parties en poids et la quantité de pigment est comprise dans la gamme de 0,1 à 5 parties en poids, procédé dans lequel les constituants de poly(sulfure d'arylène) et de matière de renforcement constituent ensemble 100 parties en poids.

**6.** Le procédé selon la revendication 5, dans lequel la quantité d'inhibiteur est comprise dans la gamme de 0,2 à 7 parties en poids et la quantité de pigment est comprise dans la gamme de 0,1 à 3 parties en poids, procédé dans lequel les constituants de poly(sulfure d'arylène) et la matière de renforcement constituent ensemble 100 parties en poids, pour produire la composition.

7. Le procédé selon la revendication 6 dans lequel la quantité d'inhibiteurs est comprise dans la gamme de 0,5 à 5 parties en poids et la quantité de pigment est comprise dans la gamme de 0,2 à 2 parties en poids, procédé dans lequel les constituants de poly(sulfure d'arylène) et de matière de renforcement constituent ensemble 100 parties en poids, pour produire la composition.

8. Le procédé selon l'une quelconque des revendications 5 à 7, dans lequel le pigment est du noir de carbone au tunnel et l'inhibiteur de corrosion du moule est une hydrotalcite.

9. Le procédé selon l'une quelconque des revendications précédentes dans lequel la matière de renforcement est des fibres de verre.

10. Le procédé selon l'une des revendications précédentes dans lequel le poly(sulfure d'arylène) est le poly(sulfure de phénylène) ayant un écoulement à l'état fondu inférieur à 400 g/10 mn comme mesuré par la norme ASTM D1238 en utilisant un poids de 5 kg à 315 °C (600 °F) au travers d'un orifice d'un diamètre de 2,1 mm (0,0825 pouce), dans lequel la matière de renforcement est des fibres de verre appropriées pour des applications électriques et dans lequel l'organosilane est un élément du groupe choisi parmi :
le 3-Aminopropyltriméthoxysilane,
le 3-Aminopropyltriéthoxysilane,
le 3-Aminopropylméthyldiéthoxysilane,
le N-Phényl-3-aminopropyltriméthoxysilane,
le p-Aminophényltriméthoxysilane,
le 3-(Diéthylamino)propyltriméthoxysilane,
le N-béta-(Aminoéthyl-gamma-aminopropyltriméthoxysilane,
la N-(2-Aminoéthyl)-N'[(3-triméthoxysilyl)propyl]-1,2-éthanediamine,
le N-(3-Aminopropyl)-N'-[(triméthoxysilyl)méthyl]-1,3-propanediamine,
le propionate de méthyl-3-[2-(triméthoxysilylpropylamino)-éthylamino],
le chlorure de N-{2-[3-(Triméthoxysilyl)propylamino) éthyl}-p-vinylbenzylammonium,
le N-bis-(2-Hydroxyéthyl)-3-aminopropyltriéthoxysilane,
le gamma-Uréidopropyltriéthyloxysilane et
le gamma-[1-(4,5-Dihydroimidazole)]-propyltriéthoxysilane.

11. Le procédé selon l'une quelconque des revendications précédentes, dans lequel le poly(sulfure d'arylène), la matière de renforcement, le polyéthylène et au moins un organosilane sont malaxés à sec ensemble pour produire un mélange et le mélange est extrudé à l'état fondu pour produire la composition dans laquelle l'extrusion à l'état fondu est mise en oeuvre à une température moyenne de la machine inférieure à 350 °C (675 °F).

12. Le procédé selon la revendication 11, dans lequel la température moyenne de la machine est inférieure à 343 °C (650 °F).

13. Le procédé selon la revendication 12, dans lequel la température moyenne de la machine est inférieure à 332 °C (630 °F).